# EUROPEAN PATENT APPLICATION

(11) **EP 4 776 320 A1**
(43) Date of publication of application: **15.07.2026**
(21) Application number: 25223669.0
(22) Date of filing: 16.12.2025
(51) Int. Cl.: H01H 47/00, B60L 3/00, B60L 3/04, H01H 50/04, H01H 50/30

(54) **ONBOARD ELECTRICAL DEVICE**

(30) Priority: 10.01.2025 JP 2025004003
(71) Applicant: Toyota Jidosha Kabushiki Kaisha, Toyota-shi, Aichi-ken 471-8571 (JP)
(72) Inventor: SHIMIZU, Yuki, Toyota-shi, 471-8571 (JP)
(74) Representative: TBK

(57) **Abstract**

An onboard electrical device 10 has normally open mechanical relays 20A, 20B. Direction D(B) in which contacts of the second mechanical relay 20B face one another is a direction that is inclined by 70° or more with respect to direction D(A) in which contacts of the first mechanical relay 20A face one another.

## Description

### BACKGROUND

### Technical Field

The present disclosure relates to an onboard electrical device.

### Related Art

Patent Document 1 discloses a battery pack for a vehicle that has plural battery cells, a positive electrode side relay, a negative electrode side relay, and a case.

### Prior Art Documents

### Patent Documents

Patent Document 1: Japanese Patent Application Laid-Open (JP-A) No. 2024-120972

### SUMMARY

A normally open mechanical relay is an example of a relay that is used in onboard electrical devices. A normally open mechanical relay means a relay of a type in which, in normal states (states in which the relay is not operating), the contacts of the relay are open, and the circuit is broken.

An object of the present disclosure is to suppress inadvertent connection of a path in an onboard electrical device using normally open mechanical relays.

An onboard electrical device relating to a first aspect includes a normally open first mechanical relay and a normally open second mechanical relay that are disposed in series and so as to be adjacent to one another, wherein a direction in which contacts of the second mechanical relay face one another is a direction that is inclined by 70° or more with respect to a direction in which contacts of the first mechanical relay face one another.

The present aspect relates to an onboard electrical device. The onboard electrical device has normally open mechanical relays.

By the way, there is the concern that normally open mechanical relays of an onboard electrical device will inadvertently turn on due to impact load at the time of a vehicle collision. In the present aspect, the normally open first mechanical relay and second mechanical relay are disposed in series and so as to be adjacent to one another, and therefore, the path on which these two relays are provided becoming connected inadvertently can be suppressed. However, further improvement is desired.

Thus, in the present aspect, the direction in which the contacts of the second mechanical relay face one another is a direction that is inclined by 70° or more with respect to the direction in which the contacts of the first mechanical relay face one another.
Therefore, at the time of a vehicle collision, the path on which the first mechanical relay and the second mechanical relay are provided becoming connected inadvertently can be suppressed more reliably. The reason for this is because, in a case in which impact load is applied in a direction in which contacts face one another, the possibility that the mechanical relays will inadvertently turn on is high, and therefore, the first mechanical relay and the second mechanical relay are provided such that the directions in which the contacts face one another differ from one another by approximately 90° (70° or more).

Note that, in the embodiment that is described hereinafter, the direction in which the contacts of the second mechanical relay face one another is a direction that is inclined by 90° with respect to the direction in which the contacts of the first mechanical relay face one another. However, the present aspect is not limited to this.

Note that, in the embodiment that is described hereinafter, the directions in which the contacts face one another of the first mechanical relay and the second mechanical relay both are directions orthogonal to the vehicle vertical direction (both are horizontal directions). However, the present aspect is not limited to this.

Note that, in the embodiment that is described hereinafter, no other electronic part such as a fuse is disposed between the first mechanical relay and the second mechanical relay, but the present aspect is not limited to this.

Note that, in the embodiment that is described hereinafter, the first mechanical relay and the second mechanical relay have the same structures, and the directions in which they are mounted on a substrate differ from one another. However, the present aspect is not limited to this. For example, the structures of the first mechanical relay and the second mechanical relay may differ greatly from one another.

Note that, in the embodiment that is described hereinafter, the mechanical relay has two of each of fixed contacts and movable contacts. However, the mechanical relays of the present aspect are not limited to this, and may have one of each of a fixed contact and a movable contact.

In an onboard electrical device relating to a second aspect, in the first aspect, directions in which the contacts face one another of the first mechanical relay and the second mechanical relay both are directions orthogonal to a vehicle vertical direction.

In the present aspect, the directions in which the contacts face one another of the first mechanical relay and the second mechanical relay both are directions orthogonal to the vehicle vertical direction (both are horizontal directions).
Therefore, it is difficult for both the first mechanical relay and the second mechanical relay to be affected by vibrations in the vehicle vertical direction.

Note that, in the embodiment that is described hereinafter, the directions in which the contacts of the first mechanical relay face one another is one of the vehicle longitudinal direction and the vehicle transverse direction, and the direction in which the contacts of the second mechanical relay face one another is the other of the vehicle longitudinal direction and the vehicle transverse direction. However, the present aspect is not limited to this. For example, the directions in which the contacts of the first mechanical relay face one another may be a direction that is inclined with respect to the vehicle longitudinal direction.

In an onboard electrical device relating to a third aspect, in the first or second aspect, the direction in which the contacts of the first mechanical relay face one another is one of a vehicle longitudinal direction and a vehicle transverse direction, and the direction in which the contacts of the second mechanical relay face one another is another of the vehicle longitudinal direction and the vehicle transverse direction.

In the present aspect, the direction in which the contacts of the first mechanical relay face one another is one of the vehicle longitudinal direction and the vehicle transverse direction, and the direction in which the contacts of the second mechanical relay face one another is the other of the vehicle longitudinal direction and the vehicle transverse direction. Therefore, it is difficult for both the first mechanical relay and the second mechanical relay to be affected by vibrations in the vehicle vertical direction, and the reliability of the circuit with respect to impact load due to a front collision improves. The reason for this is because the possibility that the mechanical relay, whose direction in which the contacts face one another is the vehicle transverse direction, will inadvertently turn on due to the impact load of a front collision is low.

In an onboard electrical device relating to a fourth aspect, in any of the first through third aspects, the onboard electrical device is a junction block provided between an onboard battery and a motor for driving a vehicle.

In the present aspect, the onboard electrical device is a junction block that is provided between the onboard battery and the motor for driving the vehicle.
Therefore, the path between the onboard battery and the motor for driving the vehicle inadvertently becoming connected can be suppressed.

As described above, in accordance with the present disclosure, inadvertent connection of a path can be suppressed in an onboard electrical device using normally open mechanical relays.

### BRIEF DESCRIPTION OF THE DRAWINGS

Fig. 1 is a schematic sectional view of an onboard electrical device.
Fig. 2 is a cross-sectional view illustrating an example of a mechanical relay.

### DETAILED DESCRIPTION

An onboard electrical device 10 relating to an embodiment is described hereinafter.

Note that arrow FR that is shown appropriately in the respective drawings indicates the vehicle forward direction, arrow UP indicates the vehicle upward direction, and arrow LH indicates the vehicle transverse direction left side. When longitudinal, vertical and left-right directions are used in the following description, they refer to the longitudinal of the vehicle longitudinal direction, the vertical of the vehicle vertical direction, and the left and right of the vehicle transverse direction, unless otherwise specified.

The onboard electrical device 10 relating to the present embodiment is the junction block 10 that is provided between an onboard battery and a motor for driving the vehicle.

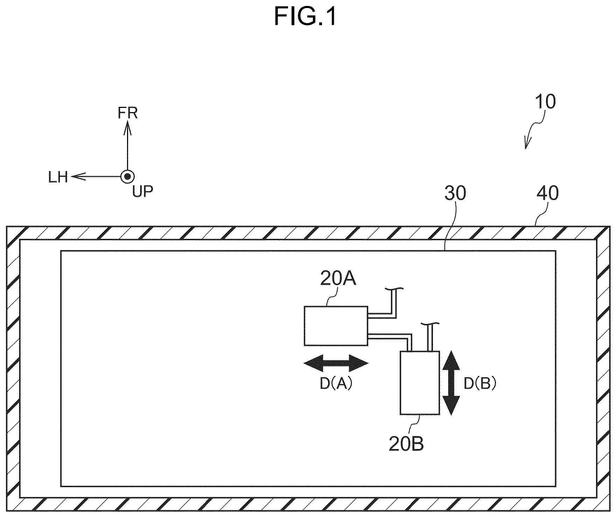

As illustrated in Fig. 1, the onboard electrical device 10 has a first mechanical relay 20A and a second mechanical relay 20B.

The first mechanical relay 20A and the second mechanical relay 20B both are normally open relays. The first mechanical relay 20A and the second mechanical relay 20B are disposed in series and so as to be adjacent to one another. Specifically, no other electronic part such as a fuse is disposed between the first mechanical relay 20A and the second mechanical relay 20B.

Direction D(A) in which the contacts of the first mechanical relay 20A face one another is the vehicle transverse direction, and direction D(B) in which the contacts of the second mechanical relay 20B face one another is the vehicle longitudinal direction. Namely, the directions in which the contacts face one another of the first mechanical relay and the second mechanical relay both are directions orthogonal to the vehicle vertical direction (both are horizontal directions). Further, the direction D(B) in which the contacts of the second mechanical relay 20B face one another is a direction that is inclined by 90° with respect to the direction in which the contacts of the first mechanical relay 20A face one another.

As illustrated in Fig. 1, the onboard electrical device 10 has a substrate 30 and a case 40.

The thickness direction of the substrate 30 is directed in the vehicle vertical direction. Circuit forming parts such as the first mechanical relay 20A and the second mechanical relay 20B are mounted to the upper surface side of the substrate. Note that bus bars that are conductive wires, and electronic parts such as fuses, are examples of circuit forming parts.

The case 40 accommodates the substrate 30 on which various types of circuit forming parts are mounted, and structures the outer shell of the onboard electrical device 10.

The first mechanical relay 20A and the second mechanical relay 20B have the same structure. Hereinafter, when description is given without differentiating therebetween, each is referred to as the mechanical relay 20.

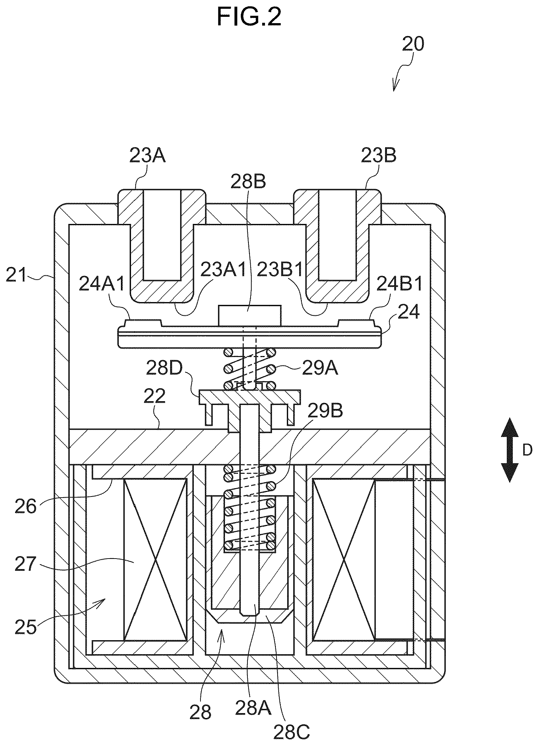

An example of the structure of the mechanical relay 20 is described hereinafter by using Fig. 2.

The mechanical relay 20 has a case 21, a sectioning member 22 that sections the space within the case 21, fixed terminals 23A, 23B, a movable terminal 24 and a driving section 25.

The driving section 25 has a yoke 26, a coil 27, a movable member 28, a first spring 29A and a second spring 29B.

The movable member 28 is provided so as to be movable along the axial direction thereof. Specifically, the movable member 28 has a shaft portion 28A, a large diameter portion 28B and a magnetic circuit portion 28C. The shaft portion 28A of the movable member 28 is inserted through the sectioning member 22 so as to move freely.

The movable terminal 24 is mounted to the shaft portion 28A of the movable member 28 so as to move freely. The first spring 29A urges the movable terminal 24 toward the large diameter portion 28B side. Specifically, the first spring 29A is disposed between the movable terminal 24 and an additional member 28D.

The second spring 29B urges the movable member 28 toward the side (the lower side in Fig. 2) opposite fixed contacts 23A1, 23B1.

When the coil 27 is not energized, the movable member 28 is urged toward the side opposite the fixed contacts 23A1, 23B1 by the elastic force of the second spring 29B. Therefore, there is a state (an off state) in which the fixed contacts 23A1, 23B1 and movable contacts 24A1, 24B1 are not connected.

When the coil 27 is energized, due to the generated magnetic field, the movable member 28 moves toward the side of the fixed contacts 23A1, 23B1 against the elastic force of the second spring 29B, and there becomes a state (an on state) in which the fixed contacts 23A1, 23B1 and the movable contacts 24A1, 24B1 are connected.

### <Operation and Effects>

Operation and effects of the present embodiment are described next.

The present embodiment relates to the onboard electrical device 10. The onboard electrical device 10 has the normally open mechanical relays 20A, 20B.

By the way, there is the concern that the normally open mechanical relays 20A, 20B of the onboard electrical device 10 will inadvertently turn on due to impact load at the time of a vehicle collision. In the present embodiment, the normally open first mechanical relay 20A and second mechanical relay 20B are disposed in series and so as to be adjacent to one another, and therefore, the path on which these two relays 20A, 20B are provided becoming connected inadvertently can be suppressed. However, further improvement is desired.

Thus, in the present embodiment, direction D(B) in which the contacts of the second mechanical relay 20B face one another is a direction that is inclined by 70° or more with respect to direction D(A) in which the contacts of the first mechanical relay 20A face one another.
Therefore, at the time of a vehicle collision, the path on which the first mechanical relay 20A and the second mechanical relay 20B are provided becoming connected inadvertently can be suppressed more reliably. The reason for this is because, in a case in which impact load is applied in a direction in which contacts face one another, the possibility that the mechanical relays 20A, 20B will inadvertently turn on is high, and therefore, the first mechanical relay 20A and the second mechanical relay 20B are provided such that the directions in which the contacts face one another differ from one another by approximately 90° (70° or more).

Further, in the present embodiment, the directions D(A), D(B) in which the contacts face one another of the first mechanical relay 20A and the second mechanical relay 20B both are directions orthogonal to the vehicle vertical direction (both are horizontal directions). Therefore, it is difficult for both the first mechanical relay 20A and the second mechanical relay 20B to be affected by vibrations in the vehicle vertical direction.

Further, in the present embodiment, direction D(A) in which the contacts of the first mechanical relay 20A face one another is one of the vehicle longitudinal direction and the vehicle transverse direction, and the direction in which the contacts of the second mechanical relay 20B face one another is the other of the vehicle longitudinal direction and the vehicle transverse direction.
Therefore, it is difficult for both the first mechanical relay 20A and the second mechanical relay 20B to be affected by vibrations in the vehicle vertical direction, and the reliability of the circuit with respect to impact load due to a front collision improves. The reason for this is because the possibility that the mechanical relay 20A, 20B, whose direction D in which the contacts face one another is the vehicle transverse direction, will inadvertently turn on due to the impact load of a front collision is low.

Further, in the present embodiment, the onboard electrical device 10 is the junction block 10 that is provided between the onboard battery and the motor for driving the vehicle. Therefore, the path between the onboard battery and the motor for driving the vehicle inadvertently becoming connected can be suppressed.

Although a preferred embodiment of the present disclosure has been described above, the present disclosure is not limited to the description of the above-described embodiment.

### Explanation of Reference Numerals

10 junction block (onboard electrical device)
20 mechanical relay
20A first mechanical relay
20B second mechanical relay
D direction in which contacts face one another

## Claims

1. An onboard electrical device comprising a normally open first mechanical relay and a normally open second mechanical relay that are disposed in series and so as to be adjacent to one another,
wherein a direction in which contacts of the second mechanical relay face one another is a direction that is inclined by 70° or more with respect to a direction in which contacts of the first mechanical relay face one another.

2. The onboard electrical device of claim 1, wherein directions in which the contacts face one another of the first mechanical relay and the second mechanical relay both are directions orthogonal to a vehicle vertical direction.

3. The onboard electrical device of claim 1, wherein
the direction in which the contacts of the first mechanical relay face one another is one of a vehicle longitudinal direction and a vehicle transverse direction, and
the direction in which the contacts of the second mechanical relay face one another is another of the vehicle longitudinal direction and the vehicle transverse direction.

4. The onboard electrical device of claim 1, wherein the onboard electrical device is a junction block provided between an onboard battery and a motor for driving a vehicle.
